# EUROPEAN PATENT SPECIFICATION

(11) **EP 2 810 796 B1**
(45) Date of publication and mention of the grant of the patent: **22.07.2015**
(21) Application number: 13170715.0
(22) Date of filing: 05.06.2013
(51) Int. Cl.: B60C 23/04

(54) **TPMS setting tool**
TPMS-Einstellwerkzeug
Outil de réglage TPMS

(43) Date of publication of application: 10.12.2014
(73) Proprietor: CUB Elecparts Inc., Changhua County (TW)
(72) Inventor: Yu, San-Chuan, Changhua County (TW); Hung, Yuan-Tung, Changhua County (TW); Wang, Tsan-Nung, Changhua County (TW); Chen, Chi-Hung, Changhua County (TW); Hu, Chao-Ching, Tainan City (TW)
(74) Representative: Becker Kurig Straus

(56) References cited:
- EP-A1- 2 495 113
- WO-A1-2009/006518
- WO-A1-2011/061455
- US-A1- 2012 222 477

## Description

### BACKGROUND OF THE INVENTION

### 1. Field of the Invention

The present invention relates to tire pressure monitoring technology and more particularly, to a TPMS (tire pressure monitoring system) setting tool.

### 2. Description of the Related Art

Wireless communication technology is commonly used in commercial TMPSs (Tire Pressure Monitoring System) for system checking or protocol/identification programming. This programming operation can be done in two methods.

The first method is to pre-store different communication protocols in the memory of the TMPS, and then to send a command wirelessly through a setting tool to select one communication protocol for execution. This method has drawbacks: The limited memory space of the TMPS does not allow storage of a large amount of communication protocols, therefore the storage amount is limited and it is not allowed for expansion. Further, during the wireless operation, it cannot immediately judge whether or not the configuration of the TPMS corresponds to the set configuration. After programmed, it cannot make sure that the TPMS has been activated or not. Further, this wireless transmission method can cause all TPMSs within the wireless signal range to receive the transmitted signal and to have their system configuration be altered or erroneously set.

The second method is to pre-store a BIOS (Basic Input/Output System), and then to write the desired communication protocol into the TPMS by means of a setting tool in a wireless manner. This method has drawbacks below: Because it adopts wireless connection, the programming procedure must be rigorously examined, slowing down the speed of the whole operation. More particularly, it cannot immediately determine whether or not the configuration of the TPMS corresponds to the set configuration during the wireless operation, or make sure that the TPMS has been activated immediately after programming. Further, due to wireless transmission, surrounding TPMSs within the wireless signal range can receive the signal, causing the settings of surrounding TPMSs to be altered or erroneously set.

WO 2009/006518 discloses a tire pressure monitoring system setting tool comprising the features of the present invention as specified in the preamble of claim 1 with the proviso that the connection port in WO 2009/006518 does not comprise a plurality of pins.

WO 2011/061455 relates to a method of replacing a defective sensor of a surveillance system for monitoring in particular the pressure of the wheels of a vehicle of the type of that comprising: wireless sensors disposed in each wheel and a receiver; a unique identifier number being assigned to each sensor thus making it possible for the receiver to identify the signal. The method consists in removing the defective sensor; identifying and logging the unique identifier number of the defective sensor; identifying and logging the communication protocol used on the vehicle; assigning said unique identifier number to a new virgin sensor with neither assigned communication protocol nor assigned identifier number, and simultaneously programming the new sensor so that it utilizes said communication protocol.

US 2012/222477 discloses a terminal encapsulated tire monitoring device electrically connectable with at least one contact of a read-write tool, including a housing, a sensor unit mounted in the housing and consisting of a circuit board and a plurality of terminal connection portions, a plurality of conducting terminals partially embedded in the housing each having a first contact and electrically connectable by one contact of the read-write tool and a second contact electrically connected to one terminal connection portion of the sensor unit.

EP 2 495 113 pertains to a blank tire pressure monitoring device including a housing having an air valve at one end and connection terminals at an opposite end, a circuit board mounted in the housing and carrying a pressure sensor, a temperature sensor, an acceleration sensor, an analog-digital converter electrically connected with the pressure sensor, the temperature sensor and the acceleration sensor, a general purpose I/O terminal unit electrically connected with the connection terminals of the housing; an embedded microcontroller module electrically connected with the general purpose I/O terminal unit and the analog-digital converter and having built therein a flash memory, a microcontroller core and a special-function register controller, a LF receiver electrically connected to the embedded microcontroller module, and a transmitter electrically connected to the embedded microcontroller module.

### SUMMARY OF THE INVENTION

The present invention has been accomplished under the circumstances in view. It is the main object of the present invention to provide a TPMS (tire pressure monitoring system), which significantly shortens the operating time in setting a tire pressure monitoring system.

It is another object of the present invention to provide a TPMS (tire pressure monitoring system) setting tool, which prevents the settings of surrounding TPMSs to be altered or erroneously set.

It is still another object of the present invention to provide a TPMS (tire pressure monitoring system) setting tool, which allows immediate reading of the ID code been written into a TPMS, making sure that the programming is successful.

To achieve these and other objects of the present invention, a TPMS setting tool of the present invention comprises a housing comprising a receptacle located at one side thereof and adapted for receiving a TPMS, the housing having mounted thereon a display unit and an input device and mounted therein a circuit board and a power supply device. The power supply device is electrically coupled to the circuit board for providing the TPMS setting tool with the necessary working power supply. The circuit board comprises a MCU (micro control unit) electrically coupled with the display unit and the input device, a memory unit electrically connected to the MCU and adapted for storing communication protocols, a low-frequency communication unit electrically connected to the MCU, a radio-frequency communication unit electrically connected to the MCU, a clock system electrically connected to the MCU, and a connection port installed in said receptacle and being electrically connected to the MCU, said connection port comprising a plurality of pins. Further, the connection port comprises a plurality of pins. The housing further comprises a lock knob disposed at one side relative to said receptacle and adapted to lock an inserted TPMS in said receptacle, allowing the inserted TPMS to be removed from said receptacle when said lock knob is pressed down by a person.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an oblique top elevational view of a tire pressure monitoring system setting tool in accordance with the present invention.
FIG. 2 is a front view of the tire pressure monitoring system setting tool in accordance with the present invention.
FIG. 3 is a block diagram of the internal circuit of the tire pressure monitoring system setting tool in accordance with the present invention.

### DETAILED DESCRIPTION OF THE INVENTION

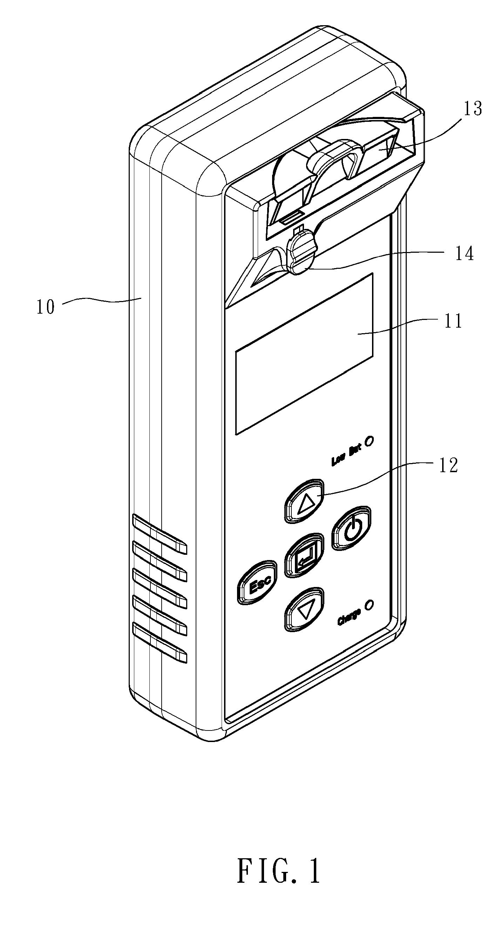

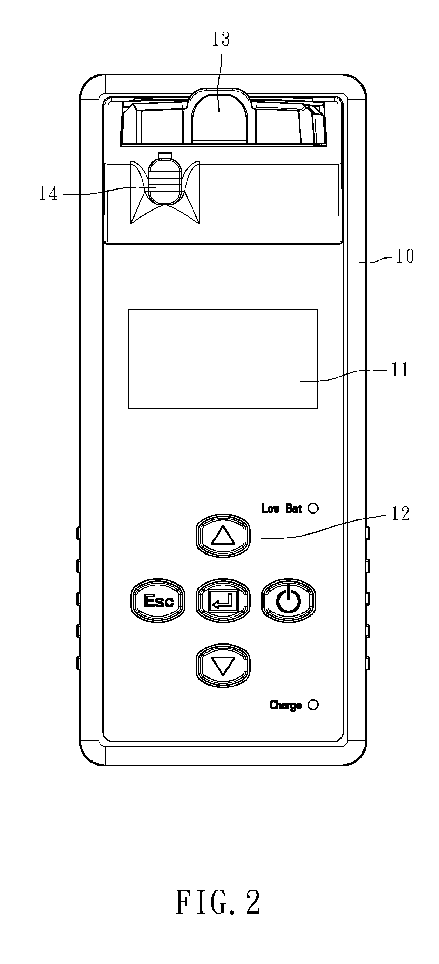

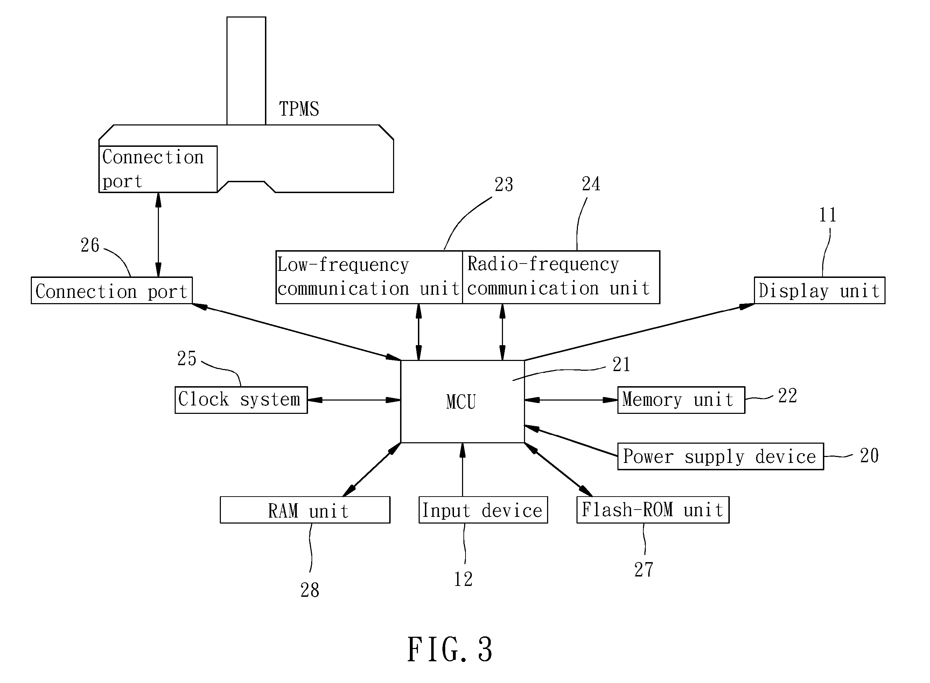

Referring to FIGS. 1-3, a TPMS (tire pressure monitoring system) setting tool in accordance with the present invention is shown. The TPMS (tire pressure monitoring system) setting tool comprises a housing **10.**

The housing **10** has a display unit **11** and an input device **12** mounted on the outside. The display unit **11** is a liquid crystal display. The input device **12** comprises a set of buttons. The housing **10** further comprises a receptacle **13** for receiving a TPMS, and a lock knob **14** disposed at one side relative to the receptacle **13.** When a TPMS is put in the receptacle **13,** the lock knob **14** locks the TPMS in place. Pressing the lock knob **14** can unlock the TPMS, allowing the TPMS to be moved out of the receptacle **13.**

The housing **10** further has a circuit board and a power supply device **20** mounted on the inside. The power supply device **20** is electrically connected to the circuit board, and adapted to provide the setting tool with the necessary working power supply.

The circuit board comprises:
a MCU (micro control unit) **21** electrically coupled with the display unit **11** and the input device **12;**
a memory unit **22** electrically coupled to the MCU **21** and adapted for storing at least one TPMS communication protocol;
a low-frequency communication unit **23** electrically coupled to the MCU **21** and working an interface of the setting tool for external communication;
a radio-frequency communication unit **24** electrically coupled to the MCU **21** and working an interface of the setting tool for external communication;
a clock system **25** electrically coupled to the MCU **21;**
a connection port **26** mounted in the receptacle **13** and electrically coupled to the MCU **21** and comprising a plurality of pins;
a flash-ROM unit **27** electrically coupled to the MCU **21;** and
a RAM unit **28** electrically coupled to the MCU **21.**

With respect to the update operation of the storage communication protocol or ID code in the setting tool, the setting tool can be linked to an external computer or other data source by means of the low-frequency communication unit or radio-frequency communication unit, enabling the external computer or data source to fetch or update the stored communication protocol or ID code data in the setting tool.

The setting tool of the present invention is applicable to a TPMS having a mating connection port. During operation, insert the TPMS into the receptacle **13** of the housing **10** to connect its mating connection port to the connection port **26** of the setting tool. Because TPMSs for different models of cars from different manufacturers use different communication protocols, it is necessary to operate the input device and the display unit of the setting tool for selecting the desired communication protocol and ID code prior to programming. This operation procedure is same as the operation of conventional designs. Therefore, no further detailed description in this regard will be given.

After selection of the desired communication protocol and ID code, the selected communication protocol and ID code are written into the TPMS directly through a wired connection, finishing the programming.

Subject to the aforesaid structural design of the present invention, the memory unit of the setting tool has sufficient space for storing a plurality of communication protocols and ID codes, eliminating the insufficient storage space problem of the prior art designs. Further, the housing provides a connection port for the connection of the connection port of a TPMS directly for communication protocol or ID code programming, avoiding altering or erroneously setting the settings of other surrounding TPMSs. Further, the MCU has a clock system electrically connected thereto and the setting tool adopts wired connection, and therefore, the setting tool can examine the configuration of the connected TPMS directly, enabling the operator to make sure that the configuration of the connected TPMS is accurate. Because of wired connection for ID code reading and writing, the setting tool can read the programmed ID code from the TPMS and then display it on the display unit immediately after writing, enabling the operator to know quickly and clearly the result, to immediately examine the TPMS and to make sure the operation is successful, or to check the matching of the ID code of the TPMS. Therefore, the invention clearly improves the drawbacks of conventional designs, achieving the expected objects.

Of course, the setting tool of the present invention can also be used to copy a communication protocol or ID code. In this case, insert the old TPMS into the receptacle of the housing to electrically connect the connection port of the old TPMS to the connection port in the receptacle, and then operate the setting tool to read the communication protocol or ID code from the old TPMS and to further store the communication protocol or ID code in the memory unit of the setting tool. Thereafter, remove the old TPMS from the setting tool and then insert a new TPMS into the receptacle to electrically connect the connection port of the new TPMS to the connection port in the receptacle, enabling the setting tool to write the communication protocol or ID code of the old TPMS into the new TPMS.

## Claims

1. A TPMS (tire pressure monitoring system) setting tool, comprising:
a housing (10) comprising a receptacle (13) located at one side thereof and adapted for receiving a TPMS, said housing (10) having mounted thereon a display unit (11) and an input device (12) and mounted therein a circuit board and a power supply device (20), said power supply device being electrically coupled to said circuit board for providing the TPMS setting tool with the necessary working power supply, said circuit board comprising:
a MCU (micro control unit) (21) electrically coupled with said display unit (11) and said input device (12);
a memory unit (22) electrically connected to said MCU (21) and adapted for storing communication protocols;
a low-frequency communication unit (23) electrically connected to said MCU (21);
a radio-frequency communication unit (24) electrically connected to said MCU (21);
a clock system (25) electrically connected to said MCU (21); and
a connection port (26) installed in said receptacle (13) and being electrically connected to said MCU (21), said connection port (26) comprising a plurality of pins, **characterized in that** said housing further comprises a lock knob (14) disposed at one side relative to said receptacle (13) and adapted to lock an inserted TPMS in said receptacle, allowing the inserted TPMS to be removed from said receptacle when said lock knob (14) is pressed down by a person.

2. The TPMS setting tool as claimed in claim 1, wherein said circuit board comprises a flash-ROM (flash read only memory) unit (27).

3. The TPMS setting tool as claimed in claim 1, wherein said circuit board comprises a RAM (random access memory) unit (28).

## Patentansprüche

1. Reifendruck-Überwachungssystem (TPMS)-Richtwerkzeug, welches umfasst:
Ein Gehäuse (10) mit einer Aufnahme (13), das an einem Ende davon angeordnet und angepasst ist, ein TPMS aufzunehmen, worin an dem Gehäuse (15) eine Anzeigeeinheit (11) und eine Eingabeeinrichtung (12) angebracht ist, und darin eine Schaltplatte und eine Stromversorgungseinrichtung (20) befestigt ist, worin die Stromversorgungseinrichtung mit der Schaltplatte elektrisch verbunden ist, um das TMPS-Richtwerkzeug mit dem notwendigen Betriebsstrom zu versorgen, worin die Schaltplatte umfasst:
Eine Mikrosteuereinheit (MCU) (21), die mit der Anzeigeeinheit (11) und der Eingabeeinrichtung (12) elektrisch verbunden ist;
Eine Speichereinheit (22), die mit der MCU (21) verbunden und angepasst ist, Verbindungsprotokolle zu speichern;
Eine Niederfrequenz-Kommunikationseinheit (23), die mit der MCU (21) elektrisch verbunden ist;
Eine Radiofrequenz-Kommunikationseinheit (24), die mit der MCU (21) elektrisch verbunden ist;
Ein Uhrsystem (25), das mit der MCU (21) elektrisch verbunden ist; und
Einen Verbindungsanschluss (26), der in der Aufnahme (13) installiert und mit der MCU (21) elektrisch verbunden ist, worin der Verbindungsanschluss (26) mehrere Pins umfasst, **dadurch gekennzeichnet, dass**
das Gehäuse weiter einen Sperrknopf (14) umfasst, der relativ zu der Aufnahme (13) an einer Seite angeordnet und angepasst ist, das inserierte TMPS in der Aufnahme zu sperren, wobei beim Drücken des Sperrknopfs (14) durch ein Individuum das inserierte TMPS aus der Aufnahme entnommen werden kann.

2. TMPS-Richtwerkzeug nach Anspruch 1, worin die Schaltplatte eine Flash-ROM (Flash-Nurlesespeicher) Einheit (27) umfasst.

3. TMPS-Richtwerkzeug nach Anspruch 1, worin die Schaltplatte eine RAM (Schreib-Lese-Speicher) Einheit (28) umfasst.

## Revendications

1. Outil de réglage d'un système de surveillance de pression de pneu (TPMS), comprenant :
un logement (10) comprenant un réceptacle (13) situé au niveau d'un côté de celui-ci et adapté pour recevoir un système de surveillance de pression de pneu, ledit logement (10) comportant, montés sur ce dernier, une unité d'affichage (11) et un dispositif d'entrée (12) et, montés à l'intérieur de ce dernier, une carte à circuit et un dispositif d'alimentation électrique (20), ledit dispositif d'alimentation électrique étant couplé électriquement à ladite carte à circuit pour fournir à l'outil de réglage de système de surveillance de pression de pneu l'alimentation électrique de travail nécessaire, ladite carte à circuit comprenant :
une unité de microcommande (MCU) (21) électriquement couplée à ladite unité d'affichage (11) et audit dispositif d'entrée (12) ;
une unité de mémoire (22) électriquement connectée à ladite unité de microcommande (21) et adaptée pour stocker des protocoles de communication ;
une unité de communication à basse fréquence (23) électriquement connectée à ladite unité de microcommande (21) ;
une unité de communication à fréquence radio (24) électriquement connectée à ladite unité de microcommande (21) ;
un système d'horloge (25) électriquement connecté à ladite unité de microcommande (21) ; et
un port de connexion (26) installé dans ledit réceptacle (13) et étant électriquement connecté à ladite unité de microcommande (21), ledit port de connexion (26) comprenant une pluralité de broches, **caractérisé en ce que**
ledit logement comprend en outre un bouton de verrouillage (14) disposé au niveau d'un côté par rapport audit réceptacle (13) et adapté pour verrouiller un système de surveillance de pression de pneu inséré dans ledit réceptacle, permettant au système de surveillance de pression de pneu inséré d'être retiré dudit réceptacle lorsque ledit bouton de verrouillage (14) est enfoncé par une personne.

2. Outil de réglage de système de surveillance de pression de pneu selon la revendication 1, dans lequel ladite carte à circuit comprend une unité de ROM flash (mémoire morte flash) (27).

3. Outil de réglage de système de surveillance de pression de pneu selon la revendication 1, dans lequel ladite carte à circuit comprend une unité de RAM (mémoire vive) (28).
